# EUROPEAN PATENT APPLICATION

(11) **EP 4 852 251 A1**
(43) Date of publication of application: **09.12.2026**
(21) Application number: 26182941.0
(22) Date of filing: 03.06.2026
(51) Int. Cl.: H02G 3/32

(54) **RANGE TAKING HARNESS MOUNT**

(30) Priority: 04.06.2025 US 202519227557; 18.08.2025 US 202519302281
(71) Applicant: Panduit Corp., Tinley Park, Illinois 60487 (US)
(72) Inventor: Treacy, Mary G., Tinley Park (US); Sylvester, David J., Tinley Park (US); Hill, Raymond M., Tinley Park (US); Rouleau, Rodney G., Tinley Park (US); Battermann, Andrew M., Tinley Park (US)
(74) Representative: Sona, Alessandro

(57) **Abstract**

A range taking harness mount secures at least one cable to a surface. The range taking harness mount includes a base and a cable support member extending from the base. The base has a top, a bottom, a first side, a second side, a front, and a back. The base includes a pass through channel extending a length of the base. The cable support member has a range taking leg used to secure the at least one cable positioned on the cable support member. The range taking leg wraps around the at least one cable positioned on the cable support member, into the base, and through the pass through channel of the base.

## Description

### Cross-Reference to Related Application(s)

This application is a continuation-in-part of U.S. Patent Application No. 19/227,557, filed on June 4, 2025, the entirety of which is hereby incorporated by reference herein.

### Field

The present disclosure relates to a harness mount for cables, and more particularly to a range taking harness mount for accommodating multiple cable sizes.

### Background

Harness mounts used to secure cable bundles to a surface are known. It is also known for the harness mounts to be releasable, when desired. Typical harness mounts have a large base compared to the fastener used to attach the base. As a result, the typical harness mount takes up a large area covering the mounting surface or mounting frame. Thus, it is desirable to provide a harness mount that would occupy less space but still works with current mounting surfaces or frames. It is also desirable to provide a harness mount capable of receiving and securing a range of cable diameters when the harness mount is secured to a surface or frame.

### Summary

A range taking harness mount secures at least one cable to a surface. The range taking harness mount includes a base and a cable support member extending from the base. The base has a top, a bottom, a first side, a second side, a front, and a back. The base includes a pass through channel that extends a length of the base. The cable support member has a range taking leg for securing the at least one cable positioned on the cable support member. The range taking leg is adapted to wrap around the at least one cable positioned on the cable support member, into the base and through the pass through channel of the base.

### Brief Description of the Drawings

FIG. 1 is a perspective view of a range taking harness mount of the present disclosure.
FIG. 2 is a back view of the range taking harness mount of FIG. 1.
FIG. 3 is a side view of the range taking harness mount of FIG. 1.
FIG. 4 is a front view of the range taking harness mount of FIG. 1.
FIG. 5 is a cross sectional view of the range taking harness mount of FIG. 4 taken along the line 5-5.
FIG.6 is a perspective view of the range taking harness mount of FIG. 1 with the range taking leg fed through the latch opening.
FIG. 7 is a side view of the range taking harness mount of FIG. 6 with the range taking leg fed through the latch opening.
FIG. 8 is a perspective view of the range taking harness mount of FIG. 1 with the range taking leg fed through the pass through channel.
FIG. 9 is a side view of the range taking harness mount of FIG. 8 with the range taking leg fed through the pass through channel.
FIG. 10 is a perspective view of an alternative range taking harness mount of the present disclosure.
FIG. 11 is a back view of the range taking harness mount of FIG. 10.
FIG. 12 is a side view of the range taking harness mount of FIG. 10.
FIG. 13 is a front view of the range taking harness mount of FIG. 10.
FIG. 14 is a side view of the range taking harness mount of FIG. 3 with a range of cables diameters represented by dashed lines.
FIG. 15 is a side view of the range taking harness mount of FIG. 12 with a range of cable diameters represented by dashed lines.
FIG. 16 is a bottom perspective view of the range taking harness mount of FIG. 10 with an adhesive mount.
FIG. 17 is a side view of the range taking harness mount of FIG. 10 with a fir tree mount.
FIG. 18 is a perspective view of the range taking harness mount of FIG. 10 with a mount for receiving a bolt.
FIG. 19 is a side view of the range taking harness mount of FIG. 10 without a mount.
FIG. 20 is a perspective view of a range taking harness mount, according to an alternative embodiment of the present disclosure.
FIG. 21 is a side view of the range taking harness mount of FIG. 20.
FIG. 22 is a perspective view of the range taking harness mount of FIG. 20.

### Detailed Description

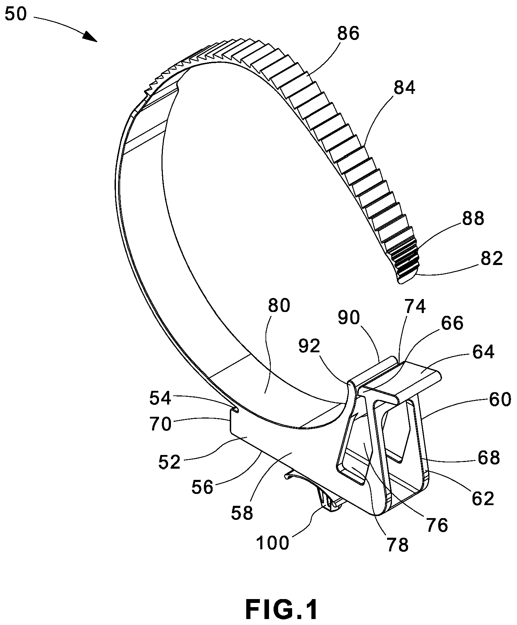

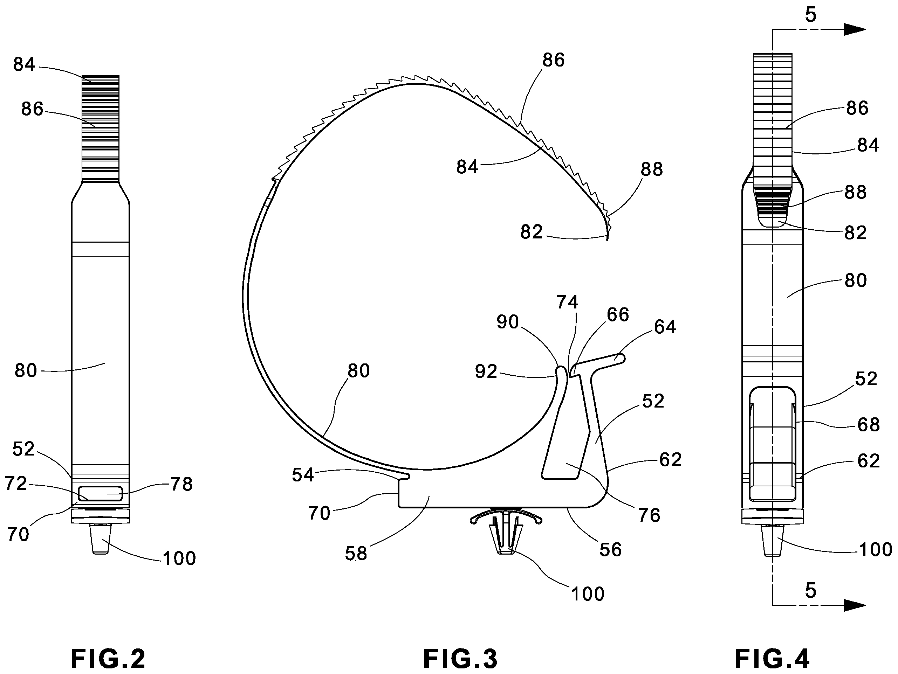

FIGS. 1-9 illustrate a range taking harness mount 50 of the present disclosure. The range taking harness mount is a single piece made from nylon or other polymer. The range taking harness mount 50 includes a base 52 with a top 54, a bottom 56, a first side 58, a second side 60, a front 62, and a back 70. A cable support member 80 extends from the top 54 of the base 52. One end 82 of the cable support member 80 includes a range taking leg 84. The range taking leg 84 includes a plurality of teeth 86 extending the width of the range taking leg 84. The range taking leg 84 also includes a plurality of ridges 88 to facilitate gripping and pulling the range taking leg 84. The opposite end 90 of the cable support member 80 has an inward curved lip 92 (see FIGS. 1 and 3).

The front 62 of the base 52 includes a latching leg 64 with a latch 66 extending therefrom. The latching leg 64 also includes a rectangular opening 68 at the front 62 of the base 52. As illustrated in FIG. 3, the latch 66 of the latching leg 64 is adjacent to the curved lip 92 of the cable support member 80. The latch 66 of the latching leg 64 and the curved lip 92 of the cable support member 80 define a latch opening 74 for receiving the range taking leg 84 at the end 82 of the cable support member 80.

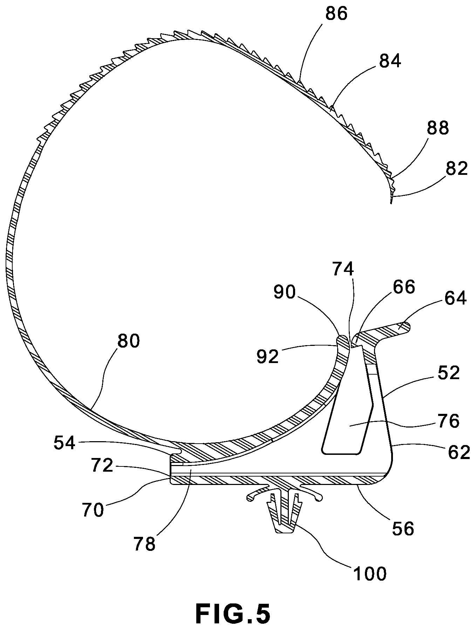

As illustrated in FIGS. 1 and 5, the base 52 also include a cavity 76 that leads to a pass through channel 78. The cavity 76 and the pass through channel 78 are defined by the top 54, bottom 56, first side 58 and second side 60 of the base 52. The pass through channel 78 extends a length of the base 52. The front 62 of the base 52 includes the rectangular opening 68 and provides access to the cavity 76. The back 70 of the base 52 includes an opening 72 that provides access to the pass through channel 78 (see FIG. 2).

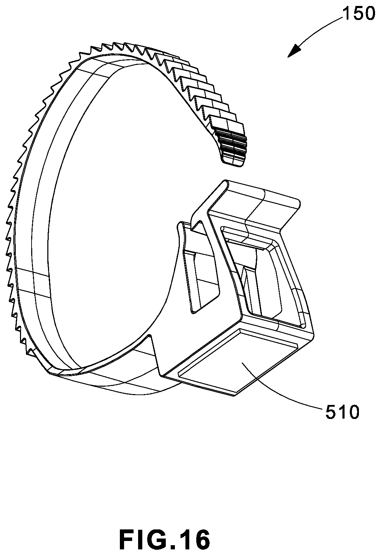

An arrowhead push mount 100 extends from the bottom 56 of the base 52. Although an arrowhead push mount is illustrated, other mounts such as those illustrated in FIGS. 16-19 may also be used to secure the range taking harness mount 50 to a surface such as a vehicle frame or any metallic or non-metallic surface.

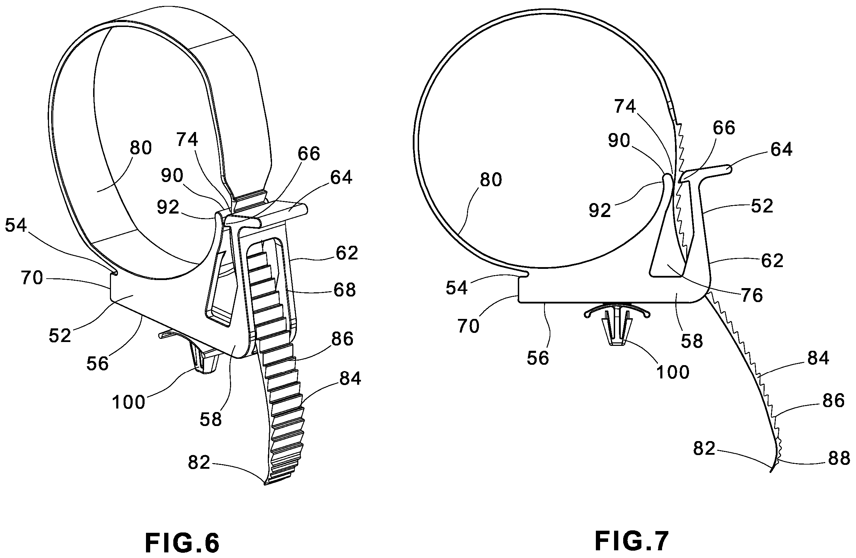

FIGS. 6-9 illustrate the range taking harness mount 50 with the range taking leg 84 inserted into the base 52 through the latch opening 74. As illustrated in FIGS. 6-7, the range taking leg 84 is fed through the latch opening 74. The latch 66 of the latching leg 64 engages the teeth 86 extending from the range taking leg 84. The free end 82 of the range taking leg 84 can be pulled via the ridges 88 into the cavity 76 and through the rectangular opening 68 in the latching leg 64 at the front 62 of the base 52, if desired.

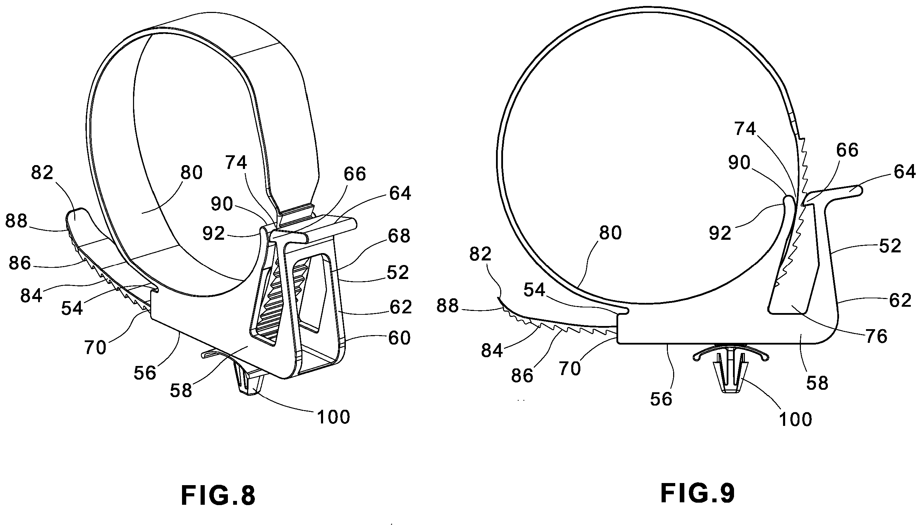

As illustrated in FIGS. 8 and 9, the range taking leg 84 is fed through the latch opening 74. The latch 66 of the latching leg 64 engages the teeth 86 extending from the range taking leg 84. The range taking leg 84 is fed through the cavity 76 and then through the pass through channel 78 in the base 52. The pass through channel 78 enables the range taking leg 84 to pass through the length of the base 52 of the mount and then back around itself. This placement of the range taking leg 84 decreases the footprint of the range taking harness mount 50 by removing the possibility of the range taking leg 84 hanging out of the front 62 or hanging below the base 52. As a result, the placement of the range taking leg 84 within the pass through channel 78 makes the footprint of the range taking harness mount 50 smaller and removes any interference to other parts that are routed nearby. The reduced footprint also enables the range taking harness mount 50 to be mounted in areas with limited space.

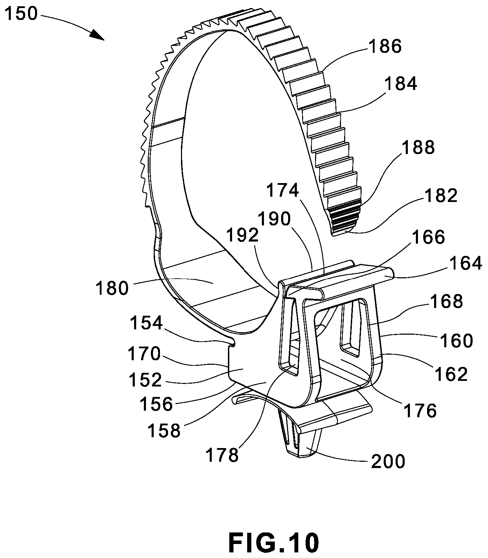

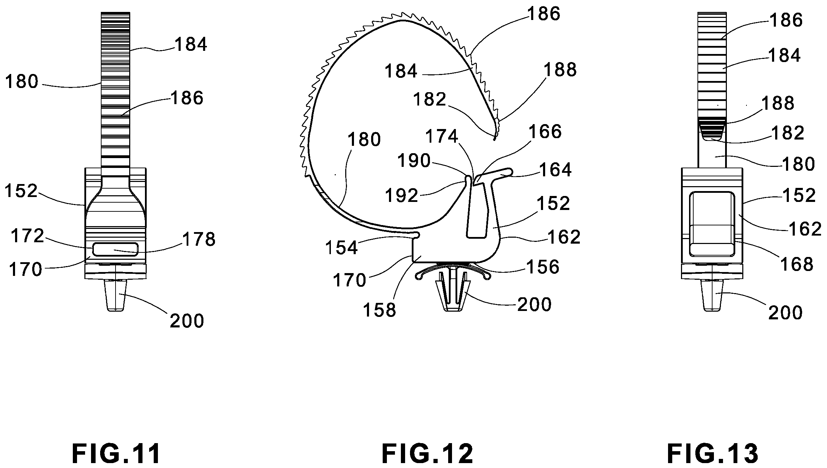

FIGS. 10-13 illustrate an alternative range taking harness mount 150 of the present disclosure. The alternative range taking harness mount 150 is a single piece made from nylon or other polymer. The range taking harness mount 150 includes a base 152, a cable support member 180 and an arrowhead push mount 200 extending from the base 152. The base 152 has a top 154, a bottom 156, a first side 158, a second side 160, a front 162, and a back 170. The cable support member 180 extends from the top 154 of the base 152. One end 182 of the cable support member 180 includes a range taking leg 184. The range taking leg 184 includes a plurality of teeth 186 extending the width of the range taking leg 184. The range taking leg 184 with teeth 186 is longer than the range taking leg 84 illustrated in FIGS. 1-9. The range taking leg 184 also includes a plurality of ridges 188 to facilitate gripping and pulling the range taking leg 184, where the ridges may have a flat or rounded top compared to the edged top of the teeth 186. The number and length of the teeth 186 will vary depending on the cable diameter range of the mount. The opposite end 190 of the cable support member 180 has an inward curved lip 192 (see FIGS. 10 and 12).

The front 162 of the base 152 includes a latching leg 164 with a latch 166 extending therefrom. The latching leg 164 also includes a rectangular opening 168 at the front 162 of the base 152. As illustrated in FIG. 12, the latch 166 of the latching leg 164 is adjacent to the curved lip 192 of the cable support member 180. The latch 166 of the latching leg 164 and the curved lip 192 of the cable support member 180 define a latch opening 174 for receiving the range taking leg 184 at the opposite end 182 of the cable support member 180.

The base 152 also includes a cavity 176 that leads to a pass through channel 178. The cavity 176 and the pass through channel 178 are defined by the top 154, bottom 156, first side 158 and second side 160 of the base 152. The front 162 of the base 152 includes the rectangular opening 168 that provides access to the cavity 176. The back 170 of the base 152 includes an opening 172 that provides access to the pass through channel 178 (see FIG. 11). The base 152 includes a shorter pass through channel 178 and a wider front with a larger rectangular opening 168 compared to the base 52. As a result, the alternative range taking harness mount 150 design would accommodate an even smaller or reduced footprint than the range taking harness mount 50 illustrated in FIGS. 1-9. A smaller footprint would be desirable when the mount is positioned against a wall of a structure to enable the mount to still be tensioned, as desired.

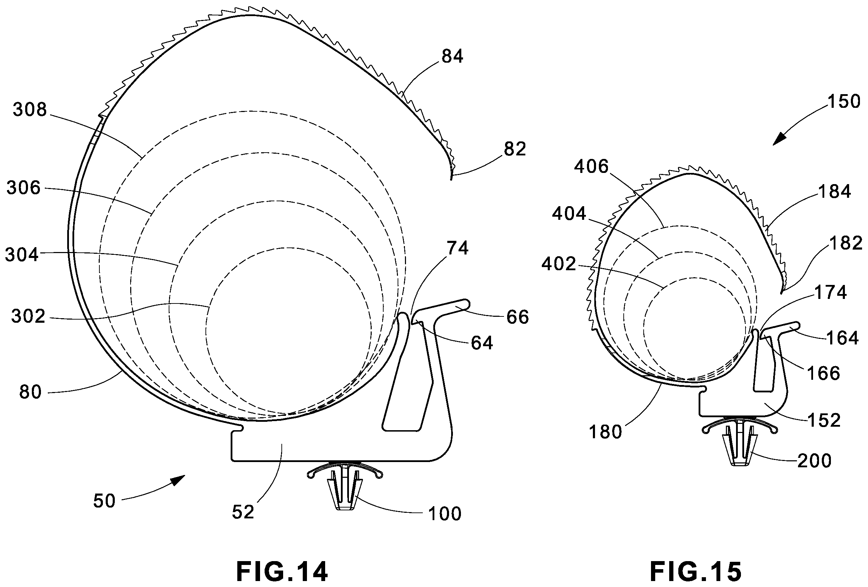

FIGS. 14-15 illustrate various cable diameter sizes 302-308, 402-406 represented by dashed lines positioned on the cable support member 80, 180, respectively. The range taking leg 84, 184 would wrap around the cable or cable bundle and enter into the latch opening 74, 174, as described above. The range taking leg 84, 184 is pulled through the cavity 76, 176 and the pass through channel 78, 178 to secure the cables 302-308, 402-406 positioned on the cable support member 80, 180.

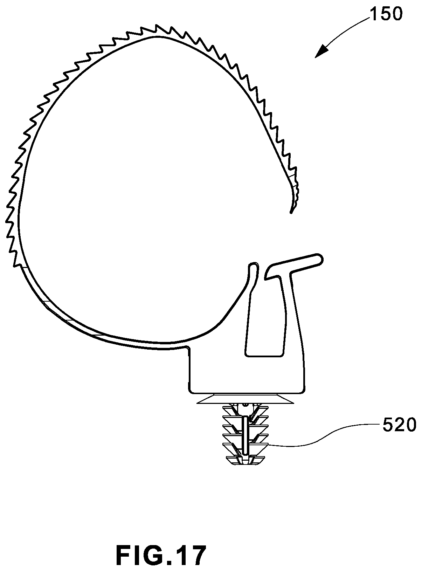

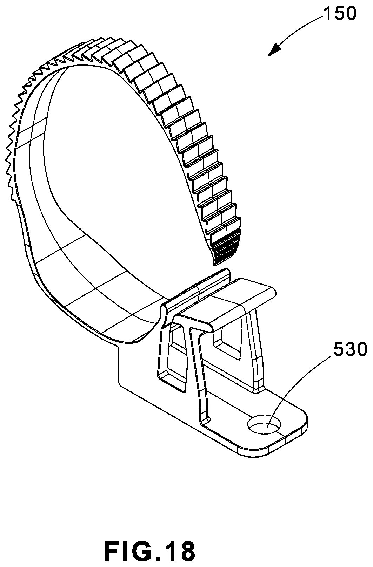

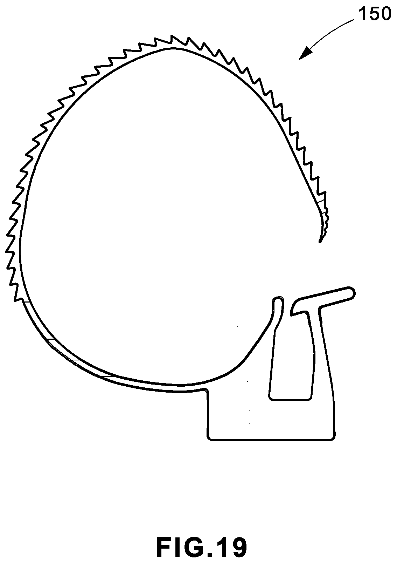

FIGS. 16-18 illustrate the range taking harness mount 150 with various mounts extending from the bottom of the base of the range taking harness mount. FIG. 16 illustrates the range taking harness mount with an adhesive layer 510 along the bottom of the base. FIG. 17 illustrates the range taking harness mount with a fir tree 520 extending from the bottom of the base. FIG. 18 illustrates the range taking harness mount with an extended base having an opening 530 for receiving a bolt, or other fastener, to secure the mount. FIG. 19 illustrates the range taking harness mount 150 without a mount extending from the base to be used to keep cable organized between mounts that are secured to surfaces.

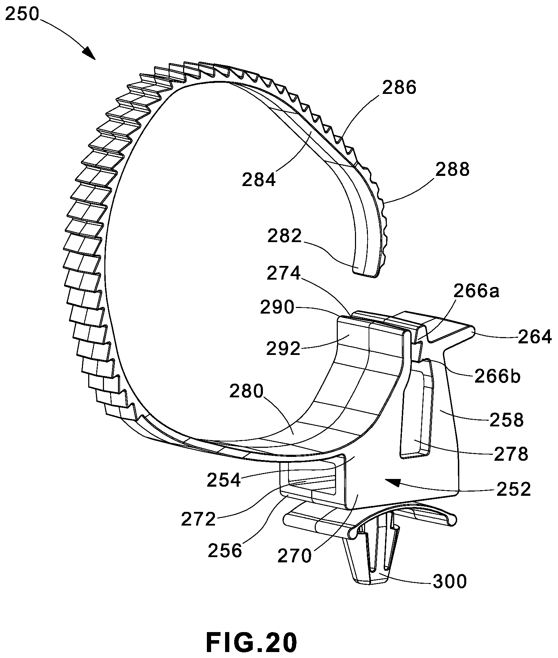

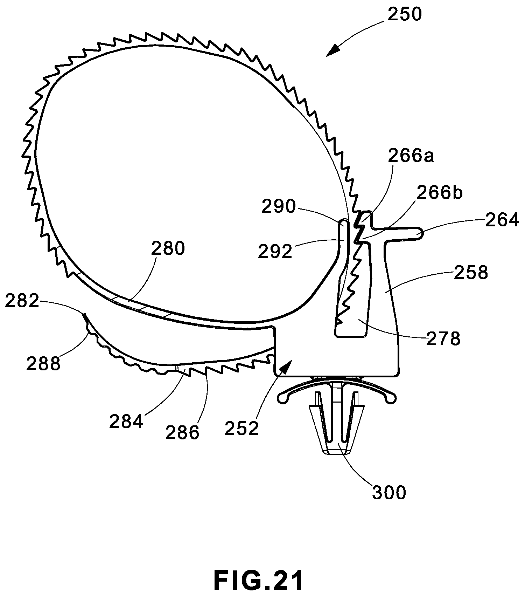

FIGS. 20-22 illustrate another alternative range taking harness mount 250 of the present disclosure. The alternative range taking harness mount 250 is a single piece made from nylon or other polymer. The range taking harness mount 250 includes a base 252, a cable support member 280 and an arrowhead push mount 300 extending from the base 252. The base 252 has a top 254, a bottom 256, a first side 258, a second side 260, a front 262, and a back 270. A cable support member 280 extends from the top 254 of the base 252. One end 282 of the cable support member 280 includes a range taking leg 284. The range taking leg 284 includes a plurality of teeth 286 extending the width of the range taking leg 284. The range taking leg 284 with teeth 286 is longer than the range taking leg 84 illustrated in FIGS. 1-9. The range taking leg 284 also includes a plurality of ridges 288 to facilitate gripping and pulling the range taking leg 284, where the ridges may have a flat or rounded top compared to the edged top of the teeth 286. The number and length of the teeth 286 will vary depending on the cable diameter range of the mount. The opposite end 290 of the cable support member 280 may have a straight vertical tip 292 or an inward curved lip (see FIG. 21).

The front 262 of the base 252 includes a latching leg 264 with a first latch 266a and a second latch 266b extending therefrom. Although two latches 266a, 266b are illustrated, other embodiments may include a different plurality of latches to engage with the teeth 286, as will be described in further detail below. The latching leg 264 also includes a rectangular opening 268 at the front 262 of the base 252. As illustrated in FIG. 21, the first latch 266a and the second latch 266b of the latching leg 264 is adjacent to the lip 292 of the cable support member 280. The latch latches 266a, 266b of the latching leg 264 and the lip 292 of the cable support member 280 define a latch opening 274 for receiving the range taking leg 284 at the opposite end 282 of the cable support member 280.

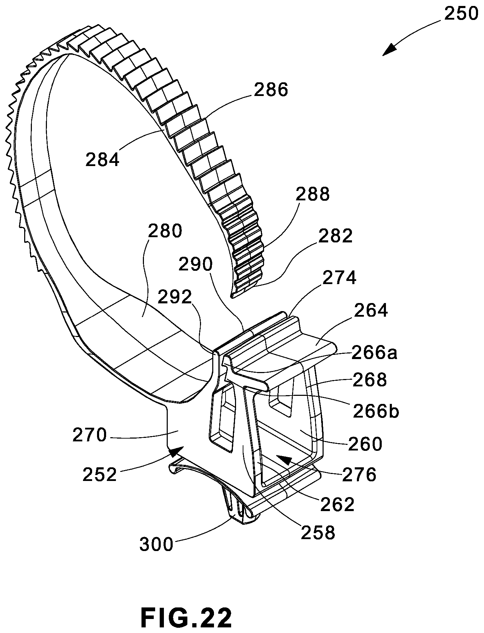

As shown in FIG. 22, the base 252 also includes a cavity 276 that leads to a pass through channel 278. The cavity 176 and the pass through channel 278 are defined by the top 254, bottom 256, first side 258 and second side 260 of the base 252. The front 262 of the base 252 includes the rectangular opening 268 that provides access to the cavity 276. The back 270 of the base 252 includes an opening 272 that provides access to the pass through channel 278 (see FIG. 20). The base 252 may include a shorter pass through channel 278 and a wider front with a larger rectangular opening 268 compared to the base 52. As a result, the alternative range taking harness mount 250 design would accommodate an even smaller or reduced footprint than the range taking harness mount 50 illustrated in FIGS. 1-9. A smaller footprint would be desirable when the mount is positioned against a wall of a structure to enable the mount to still be tensioned, as desired.

Furthermore, while the particular preferred embodiments of the present disclosure have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the invention is intended to be defined in the following claims when viewed in their proper perspective based on the prior art.

## Claims

1. A range taking harness mount for securing at least one cable to a surface, the range taking harness mount comprising:
a base with a top, a bottom, a first side, a second side, a front, and a back, wherein the base has a pass through channel extending a length of the base;
a cable support member extending from the top of the base, the cable support member has a range taking leg for securing the at least one cable positioned on the cable support member; and
wherein the range taking leg is adapted to wrap around the at least one cable positioned on the cable support member, into the base and through the pass through channel of the base.

2. The range taking harness mount of claim 1, wherein the back of the base has an opening for providing access to the pass through channel.

3. The range taking harness mount of claim 1 or 2, wherein the base includes a cavity that leads to the pass through channel.

4. The range taking harness mount of any preceding claim, wherein the range taking leg is at one end of the cable support member and a lip is at an opposite end of the cable support member.

5. The range taking harness mount of claim 4, wherein the lip is a curved lip.

6. The range taking harness mount of any preceding claim, wherein a front of the base includes a latching leg comprising at least two latches extending therefrom.

7. The range taking harness mount of any of claims 1 to 5, wherein a front of the base includes a latching leg comprising a latch extending therefrom.

8. The range taking harness mount of claim 6 or 7, wherein the latch is adjacent to a lip of the cable support member, and wherein the latch and the lip define a latch opening for receiving the range taking leg of the cable support member.

9. The range taking harness mount of claim 8, wherein the range taking leg is fed into the base through the latch opening, and wherein the latch or latches of the latching leg engages teeth on the range taking leg to secure the range taking leg.

10. The range taking harness mount of any preceding claim, wherein the range taking leg has a plurality of teeth extending a width of the range taking leg.

11. The range taking harness mount of any preceding claim, wherein the range taking leg has a plurality of ridges for gripping the range taking leg to position within the base.

12. The range taking harness mount of claim 11, wherein the plurality of ridges have a flat top.

13. The range taking harness mount of any preceding claim, further comprising an arrowhead push mount extending from the bottom of the base for mounting the range taking harness mount to the surface.

14. Use of the range taking harness mount of any preceding claim in securing a range of cable.
